# EUROPÄISCHE PATENTANMELDUNG

(11) **EP 4 607 542 A1**
(43) Veröffentlichungstag der Anmeldung: **27.08.2025**
(21) Anmeldenummer: 24159550.3
(22) Anmeldetag: 26.02.2024
(51) Int. Cl.: H01B 17/28

(54) **HOCHSPANNUNGSVORRICHTUNG**

(71) Anmelder: HSP Hochspannungsgeräte GmbH, 53842 Troisdorf (DE)
(72) Erfinder: Lider, Paul, 53721 Siegburg (DE); Heil, Bernhard, 53227 Bonn (DE); Loeffler, Ulrich, 53919 Weilerswist (DE); Bauer, Christian, 53424 Remagen (DE); Hertzel, Benjamin, 53639 Königswinter (DE)
(74) Vertreter: Betten & Resch

(57) **Zusammenfassung**

Hochspannungsvorrichtung (1), die aufweist: einen Isolierkörper (20); einen Innenleiter (10), der in einer Axialrichtung durch den Isolierkörper (20) hindurchgeführt ist; eine Polsterschicht (30) aus einem elektrisch nicht leitfähigen Material, die zwischen dem Innenleiter (10) und dem Isolierkörper (20) angeordnet ist, sich konzentrisch um den Innenleiter (10) erstreckt und eine Durchgangsöffnung (31) in einer Radialrichtung aufweist; und eine Kontaktierungseinrichtung (40), die zumindest teilweise in der Durchgangsöffnung (31) der Polsterschicht (30) angeordnet und eingerichtet ist, um eine elektrisch leitfähige Verbindung vom Innenleiter (10) durch die Polsterschicht (30) zum Isolierkörper (20) zu führen. Die Kontaktierungseinrichtung (40) weist eine flexible, leitfähige Füllung (41) auf, die in der Durchgangsöffnung (31) der Polsterschicht (30) angeordnet ist.

## Beschreibung

Die Anmeldung betrifft eine Hochspannungsvorrichtung mit einem Innenleiter und einem Isolierkörper, der den Innenleiter umgibt.

Ölfreie Hochspannungsdurchführungen umfassen zumeist einen zentralen, metallischen Innenleiter und einen Isolierkörper in Form eines auf den Innenleiter gewickelten Epoxidharzkörpers. Eine solche Hochspannungsdurchführung hat die Aufgabe, den im Betrieb auf einem Hochspannungspotenzial liegenden Innenleiter von der Umgebung elektrisch zu isolieren.

Während des Herstellungsprozesses einer Hochspannungsdurchführung können hohe Temperaturen auftreten. Um Beschädigungen während der Herstellung und der anschließenden Abkühlung auf Raumtemperatur, bedingt etwa durch unterschiedliche Ausdehnungskoeffizienten der beteiligten Materialien, aber auch während des regulären Betriebs zu verhindern, kann eine Polsterung zwischen dem Innenleiter und dem Isolierkörper installiert sein. Die Polsterung ist nicht leitfähig.

Eine Hochspannungsdurchführung mit einer Korkschicht als Polsterung zur Minderung mechanischer Spannungen ist aus der WO 2017/101992 A1 bekannt. Die Hochspannungsdurchführung der WO 2017/101992 A1 umfasst ferner eine Kontaktierungseinrichtung zur Herstellung einer elektrischen Verbindung zwischen dem Innenleiter und einer elektrisch leitfähigen Kontakteinlage des Isolierkörpers.

Die elektrische Verbindung zwischen dem Innenleiter und dem Isolierkörper, beispielsweise mittels kleiner Kontaktzungen, ist durch die Polsterung zu führen. Etwaige Relativbewegungen der Komponenten können dazu führen, dass die Kontaktzungen reißen bzw. brechen und damit die Funktion der Kontaktierungseinrichtung verloren geht. Darüber hinaus kann Harz zwischen die Kontaktflächen laufen, was zu einer Störung des elektrischen Kontakts führen kann.

Eine Aufgabe der Erfindung besteht darin, eine verbesserte Hochspannungsvorrichtung bereitzustellen.

Die Aufgabe wird durch eine Hochspannungsvorrichtung mit den Merkmalen des Anspruchs 1 gelöst. Vorteilhafte Weiterbildungen folgen aus den Unteransprüchen, der folgenden Darstellung der Erfindung sowie der Beschreibung bevorzugter Ausführungsbeispiele.

Die Erfindung betrifft eine Hochspannungsvorrichtung mit einem Isolierkörper und einem Innenleiter, der in einer Axialrichtung durch den Isolierkörper hindurchgeführt ist. In anderen Worten, der Isolierkörper umgibt den Innenleiter. Der Innenleiter definiert eine Axialrichtung und eine Radialrichtung. Die Hochspannungsvorrichtung ist vorzugsweise axialsymmetrisch aufgebaut. Der Isolierkörper ist eingerichtet, um den im Betrieb auf einem Hochspannungspotenzial liegenden Innenleiter von der Umgebung elektrisch zu isolieren.

Die Hochspannungsvorrichtung umfasst ferner eine Polsterschicht aus einem elektrisch nicht leitfähigen Material, die zwischen dem Innenleiter und dem Isolierkörper angeordnet ist, sich konzentrisch um den Innenleiter erstreckt und eine Durchgangsöffnung in Radialrichtung aufweist.

Die Polsterschicht dient dazu, etwaige mechanische Spannungen in der Hochspannungsvorrichtung zu kompensieren. Solche mechanischen Spannungen können beispielsweise aufgrund unterschiedlicher Ausdehnungskoeffizienten während einer Temperaturänderung, insbesondere während des Herstellungsprozesses aber auch im regulären Betrieb, auftreten. Die Polsterschicht weist zu diesem Zweck vorzugsweise eine gewisse Flexibilität auf.

Die Hochspannungsvorrichtung gemäß der Erfindung weist ferner eine Kontaktierungseinrichtung auf, die zumindest teilweise in der Durchgangsöffnung der Polsterschicht angeordnet und eingerichtet ist, um eine elektrisch leitfähige Verbindung vom Innenleiter durch die Polsterschicht zum Isolierkörper, insbesondere zu einer im Isolierkörper angeordneten Steuereinlage, zu führen. Die Kontaktierungseinrichtung umfasst eine flexible, leitfähige Füllung, welche in der Durchgangsöffnung der Polsterschicht angeordnet ist.

Die so aufgebaute Kontaktierungseinrichtung ermöglicht eine gute elektrische Kontaktierung, die flexibel ist, um etwaige Relativbewegungen zwischen dem Innenleiter und dem Isolierkörper bei der Fertigung aber auch im Einsatz zuverlässig zu kompensieren. Die Füllung ist aufgrund ihrer Flexibilität gegenüber inneren Spannungen und Bewegungen der Hochspannungsvorrichtung resilient, wodurch die Funktionsfähigkeit der Kontaktierungseinrichtung zuverlässig gewahrt ist.

Vorzugsweise füllt die Füllung die Durchgangsöffnung der Polsterschicht vollständig aus, wodurch die Füllung die Durchgangsöffnung abdichtet und die Zuverlässigkeit der Kontaktierungseinrichtung weiter erhöht.

Vorzugsweise ist die Füllung aus einem nicht leitfähigen Grundmaterial gefertigt, beispielsweise aus einem Elastomer, das durch Zusatz von leitfähigen Komponenten, insbesondere leitfähigen Partikeln und/oder leitfähigen Drähten, leitfähig gemacht ist. Auf diese Weise lassen sich die gewünschte Flexibilität der Füllung und die Leitfähigkeit in einer Materialkombination vereinigen.

Vorzugsweise ist die Füllung etwas dicker als die Polsterschicht, um eine zuverlässige Kontaktierung auf beiden Seiten der Polsterschicht zu gewährleisten.

Vorzugsweise umfasst die Kontaktierungseinrichtung ein leitfähiges Band, beispielsweise Metallband, das die isolierkörperseitige Kontaktfläche der Füllung teilweise oder vollständig überdeckt. Auf diese Weise sind die Kontaktflächen der Kontaktierungseinrichtung vor etwaigem flüssigem Gießharz geschützt, sodass auch unter Relativbewegungen stets saubere Kontaktflächen vorliegen.

Vorzugsweise weist die Kontaktierungseinrichtung eine Befestigung auf, die eingerichtet ist, um die Kombination aus Füllung und leitfähigem Band zu stabilisieren. Auf diese Weise kann die Zuverlässigkeit der Kontaktierungseinrichtung weiter verbessert werden.

Aus dem gleichen Grund ist die Befestigung vorzugsweise durch ein Klebeband realisiert, das die Füllung und das leitfähige Band verpresst.

Vorzugsweise weist der Isolierkörper eine oder mehrere Steuereinlagen auf, die sich konzentrisch um den Innenleiter erstrecken. Die Steuereinlagen können aus leitfähigen Folien gefertigt sein. Auf diese Weise findet eine Feldsteuerung statt, so dass außerhalb der Hochspannungsvorrichtung keine erhebliche Feldbelastung vorliegt.

Vorzugsweise steht die Kontaktierungseinrichtung mit einer der Steuereinlagen elektrisch in Kontakt, insbesondere mit der Steuereinlage, die dem Innenleiter radial am nächsten liegt.

Vorzugsweise umfasst der Isolierkörper ausgehärtetes Harz in Form von harzimprägnierten Isolierlagen, die konzentrisch oder spiralförmig um den Innenleiter unter Ausbildung eines Wickelkörpers gewickelt sind. Die Isolierlagen können Papier oder Vlies umfassen. Auf diese Weise kann die Herstellung der Hochspannungsvorrichtung besonders einfach und kostengünstig erfolgen. Darüber hinaus kann eine besonders gleichmäßige Anordnung der Isolierlagen im Isolierkörper gewährleistet werden. Die derart ausgestaltete Hochspannungsvorrichtung ist besonders wartungsarm.

Weitere Vorteile und Merkmale der vorliegenden Erfindung sind aus der folgenden Beschreibung bevorzugter

Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitende Zeichnung.

### Kurze Beschreibung der Figur

Bevorzugte weitere Ausführungsformen der Erfindung werden durch die nachfolgende Beschreibung der Figur näher erläutert. Dabei zeigt:

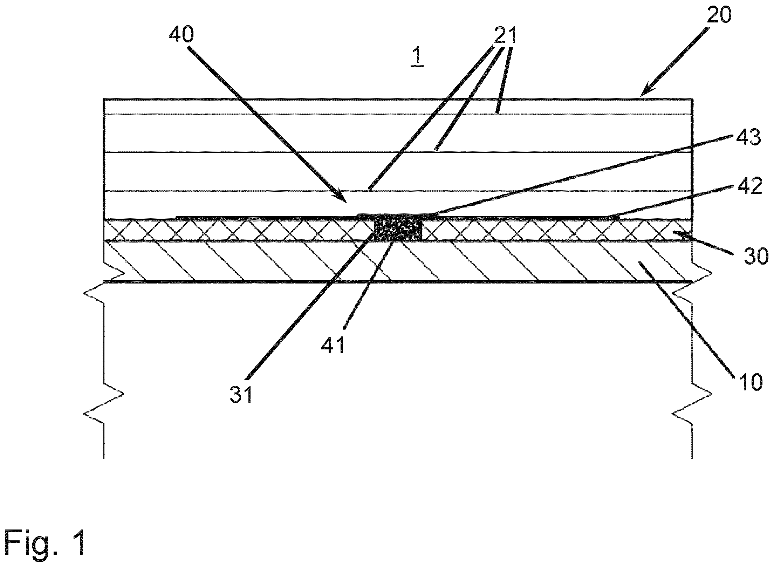

- Figur 1: schematisch einen Längsschnitt durch eine Hochspannungsvorrichtung mit einem Innenleiter, einem Isolierkörper, einer Polsterschicht und einer Kontaktierungseinrichtung.

### Detaillierte Beschreibung bevorzugter Ausführungsbeispiele

Im Folgenden werden bevorzugte Ausführungsbeispiele anhand der Figur 1 beschrieben.

Die Figur 1 zeigt schematisch einen Längsschnitt durch eine Hochspannungsvorrichtung 1 mit einem Innenleiter 10 und einem Isolierkörper 20, der den Innenleiter 10 umgibt. Die Hochspannungsvorrichtung 1 ist axialsymmetrisch aufgebaut, wobei die Figur 1 nur eine "Hälfte" des Isolierkörpers 20 zeigt.

Der Innenleiter 10 ist aus einem leitfähigen Material, insbesondere einem Metall, gefertigt und liegt im regulären Betrieb auf einem Hochspannungspotenzial.

Der Isolierkörper 20 umfasst bevorzugt ausgehärtetes Harz, etwa Epoxidharz. Gemäß einer Ausführungsform umfasst der Isolierkörper 20 harzimprägnierte Isolierlagen. Ein solcher Isolierkörper 20 ist nach der Imprägnierung mit dem Harz (beispielsweise Epoxidharz) formfest und bildet einen relativ harten Block. Die Isolierlagen können Papier oder Vlies umfassen und konzentrisch oder spiralförmig um den Innenleiter 10 unter Ausbildung eines Wickelkörpers gewickelt sein. Auf diese Weise kann die Herstellung der Hochspannungsvorrichtung 1 besonders einfach und kostengünstig erfolgen. Darüber hinaus kann eine besonders gleichmäßige Anordnung der Isolierlagen im Isolierkörper 20 gewährleistet werden. Die derart ausgestaltete Hochspannungsvorrichtung 1 ist besonders wartungsarm.

Im Innern des Isolierkörpers 20 können sich konzentrisch um den Innenleiter 10 Steuereinlagen 21 erstrecken. Die Steuereinlagen 21 ermöglichen eine Feldsteuerung. Die Steuereinlagen 21 sind vorzugsweise aus leitfähigen Folien gefertigt.

Zwischen dem Innenleiter 10 und dem Isolierkörper 20 ist eine Polsterschicht 30 vorgesehen, die zur Minderung mechanischer Spannungen in der Hochspannungsvorrichtung 1 eingerichtet ist. Solche mechanischen Spannungen können beispielsweise aufgrund unterschiedlicher Ausdehnungskoeffizienten während einer Temperaturänderung, insbesondere während des Herstellungsprozesses aber auch während des regulären Betriebs, auftreten. Die Polsterschicht 30 ist aus einem nicht leitfähigen Werkstoff, etwa einem Kunststoff, gefertigt, der eine gewisse Flexibilität aufweist, um Relativbewegungen zwischen dem Innenleiter und dem Isolierkörper kompensieren zu können.

Die Hochspannungsvorrichtung 1 weist ferner eine Kontaktierungseinrichtung 40 auf, die eingerichtet ist, um durch die Polsterschicht 30 eine elektrisch leitfähige Verbindung zu führen, insbesondere um so eine elektrische Verbindung zur innersten Steuereinlage 21 des Isolierkörpers 20 herzustellen.

Zu diesem Zweck weist die Polsterschicht 30 zumindest eine Durchgangsöffnung 31 auf, in der die Kontaktierungseinrichtung 40 zumindest teilweise installiert ist, d.h. die Kontaktierungseinrichtung 40 ersetzt einen kleinen Teil der Polsterschicht 30.

Die Kontaktierungseinrichtung 40 umfasst eine flexible, leitfähige Füllung 41, welche die Durchgangsöffnung 31 der Polsterschicht 30 teilweise oder vollständig ausfüllt. Die Füllung 41 kann aus einem nicht leitfähigen Grundmaterial gefertigt sein, insbesondere Kunststoff wie etwa Elastomer, das durch Zusatz von leitfähigen Partikeln, Metalldrähten oder dergleichen leitfähig gemacht ist. Die Füllung 41 ist vorzugsweise etwas dicker als die Polsterschicht 30, um eine zuverlässige Kontaktierung auf beiden Seiten der Polsterschicht 30 zu gewährleisten.

Gemäß der vorliegenden Ausführungsform ist die Füllung 41 bzw. deren isolierkörperseitige Kontaktfläche mit einem leitfähigen Band 42, beispielsweise einem Metallband, überdeckt.

Die Kombination aus der Füllung 41 und dem leitfähigen Band 42 kann anschließend mittels einer Befestigung 43 stabilisiert werden. Vorzugsweise werden die Füllung 41 und das leitfähige Band 42 mittels eines Klebebands, das in diesem Fall die Befestigung realisiert, verpresst.

Die so aufgebaute Kontaktierungseinrichtung 40 ermöglicht eine gute elektrische Kontaktierung zwischen dem Innenleiter 10 und dem Isolierkörper 20, die flexibel ist, um etwaige Relativbewegungen zwischen dem Innenleiter 10 und dem Isolierkörper 20 bei der Fertigung aber auch im Einsatz zuverlässig zu kompensieren. Die Füllung 41 gemeinsam mit dem leitfähigen Band 42 realisiert ein elastisches, dichtendes Material, das gegenüber inneren Spannungen und Bewegungen resilient ist und die Funktionsfähigkeit beibehält. Die Kontaktflächen der Kontaktierungseinrichtung 40 sind vor etwaigem flüssigem Gießharz geschützt, sodass auch unter Relativbewegungen stets saubere Kontaktflächen vorliegen.

Soweit anwendbar können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Hochspannungsvorrichtung
- 10: Innenleiter
- 20: Isolierkörper
- 21: Steuereinlage
- 30: Polsterschicht
- 31: Durchgangsöffnung
- 40: Kontaktierungseinrichtung
- 41: Leitfähige Füllung
- 42: Leitfähiges Band
- 43: Befestigung

## Patentansprüche

1. Hochspannungsvorrichtung (1), die aufweist:
einen Isolierkörper (20);
einen Innenleiter (10), der in einer Axialrichtung durch den Isolierkörper (20) hindurchgeführt ist;
eine Polsterschicht (30) aus einem elektrisch nicht leitfähigen Material, die zwischen dem Innenleiter (10) und dem Isolierkörper (20) angeordnet ist, sich konzentrisch um den Innenleiter (10) erstreckt und eine Durchgangsöffnung (31) in einer Radialrichtung aufweist; und
eine Kontaktierungseinrichtung (40), die zumindest teilweise in der Durchgangsöffnung (31) der Polsterschicht (30) angeordnet und eingerichtet ist, um eine elektrisch leitfähige Verbindung vom Innenleiter (10) durch die Polsterschicht (30) zum Isolierkörper (20) zu führen;
**dadurch gekennzeichnet, dass**
die Kontaktierungseinrichtung (40) eine flexible, leitfähige Füllung (41) aufweist, die in der Durchgangsöffnung (31) der Polsterschicht (30) angeordnet ist.

2. Hochspannungsvorrichtung (1) nach Anspruch 1, **dadurch gekennzeichnet, dass** die Füllung (41) die Durchgangsöffnung (31) der Polsterschicht (30) vollständig ausfüllt.

3. Hochspannungsvorrichtung (1) nach Anspruch 1 oder 2, **dadurch gekennzeichnet, dass** die Füllung (41) aus einem nicht leitfähigen Grundmaterial gefertigt ist, vorzugsweise aus einem Elastomer, das durch Zusatz von leitfähigen Komponenten, vorzugsweise leitfähigen Partikeln und/oder leitfähigen Drähten, leitfähig gemacht ist.

4. Hochspannungsvorrichtung (1) nach einem der vorigen Ansprüche, **dadurch gekennzeichnet, dass** die Füllung (41) dicker als die Polsterschicht (30) ist.

5. Hochspannungsvorrichtung (1) nach einem der vorigen Ansprüche, **dadurch gekennzeichnet, dass** die Kontaktierungseinrichtung (40) ein leitfähiges Band (42), vorzugsweise Metallband, aufweist, das die isolierkörperseitige Kontaktfläche der Füllung (41) teilweise oder vollständig überdeckt.

6. Hochspannungsvorrichtung (1) nach Anspruch 5, **dadurch gekennzeichnet, dass** die Kontaktierungseinrichtung (40) eine Befestigung (43) aufweist, die eingerichtet ist, um die Kombination aus der Füllung (41) und dem leitfähigen Band (42) zu stabilisieren.

7. Hochspannungsvorrichtung (1) nach Anspruch 6, **dadurch gekennzeichnet, dass** die Befestigung (43) durch ein Klebeband realisiert ist, das die Füllung (41) und das leitfähige Band (42) verpresst.

8. Hochspannungsvorrichtung (1) nach einem der vorigen Ansprüche, **dadurch gekennzeichnet, dass** der Isolierkörper (20) eine oder mehrere Steuereinlagen (21) aufweist, die sich konzentrisch um den Innenleiter (10) erstrecken, wobei die Steuereinlagen (21) vorzugsweise aus leitfähigen Folien gefertigt sind.

9. Hochspannungsvorrichtung (1) nach Anspruch 8, **dadurch gekennzeichnet, dass** die Kontaktierungseinrichtung (40) mit einer der Steuereinlagen (21) elektrisch in Kontakt steht, vorzugsweise mit der Steuereinlage, die dem Innenleiter (10) radial am nächsten liegt.

10. Hochspannungsvorrichtung (1) nach einem der vorigen Ansprüche, **dadurch gekennzeichnet, dass** der Isolierkörper (20) ausgehärtetes Harz in Form von harzimprägnierten Isolierlagen umfasst, die konzentrisch oder spiralförmig um den Innenleiter (10) unter Ausbildung eines Wickelkörpers gewickelt sind, wobei die Isolierlagen vorzugsweise Papier oder Vlies umfassen.
